Europäisches Patentamt

European Patent Office

Office européen des brevets

(19)

(11) Numéro de publication : **0 489 651 B1**

## (12) FASCICULE DE BREVET EUROPEEN

(45) Date de publication du fascicule du brevet :
**13.07.94 Bulletin 94/28**

(51) Int. Cl.$^5$ : **G01P 3/486,** G01P 1/00,
G01D 5/34, G01P 3/488

(21) Numéro de dépôt : **91403276.8**

(22) Date de dépôt : **03.12.91**

(54) **Capteur tachymétrique intrinsèque à fibre optique.**

(30) Priorité : **04.12.90 FR 9015162**

(43) Date de publication de la demande :
**10.06.92 Bulletin 92/24**

(45) Mention de la délivrance du brevet :
**13.07.94 Bulletin 94/28**

(84) Etats contractants désignés :
**DE FR GB**

(56) Documents cités :
**US-A- 4 947 035**
**PATENT ABSTRACTS OF JAPAN, vol. 8, no. 48**
**(P-258)(1485), 3 Mars 1984 & JP-A-58 200166**

(73) Titulaire : **SEXTANT AVIONIQUE**
**5,7, rue Jeanne Braconnier**
**Parc Tertiaire**
**F-92360 Meudon-la-Forêt (FR)**

(72) Inventeur : **Beigbeder, Gérard**
**THOMSON-CSF,**
**SCPI**
**B.P.329**
**50, rue J.-P. Timbaud**
**F-92402 Courbevoie Cédex (FR)**
Inventeur : **Michoud, Vincent**
**THOMSON-CSF,**
**SCPI,**
**B.P.329**
**50,rue J.-P. Timbaud**
**F-92402 Courbevoie Cédex (FR)**

(74) Mandataire : **Benoit, Monique et al**
**THOMSON-CSF**
**SCPI**
**B.P. 329**
**50, rue Jean-Pierre Timbaud**
**F-92402 Courbevoie Cédex (FR)**

## Description

L'invention se situe dans le domaine des capteurs destinés à la mesure des vitesses de rotation, en particulier celles des arbres de turbo moteur et turbo réacteurs.

Le contrôle de vitesse des arbres de turbo moteurs ou turbo réacteurs est assuré aujourd'hui par les équipements électromécaniques classiques que l'on appelle les "roues phoniques" qui peuvent être assimilés à des alternateurs homopolaires.

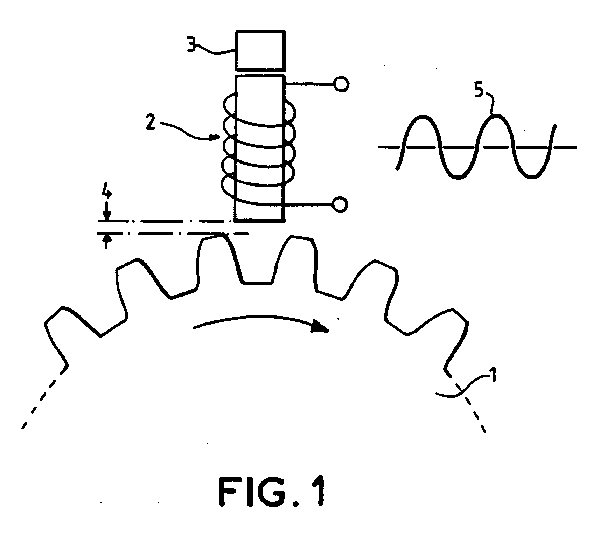

Le schéma d'un tel dispositif est représenté figure 1.

Ces alternateurs homopolaires sont composés de : (voir figure 1).
- une partie tournante 1 constituée d'une roue en acier magnétique à Z dents, liée en rotation à l'arbre à contrôler, (non représenté) ;
- une partie fixe constituée d'une bobine à noyau magnétique 2 contre, lequel est collé coaxialement un aimant 3 .

L'ensemble est disposé de telle sorte que le passage des dents crée des variations de flux dans l'entrefer 4 , d'où résulte une tension induite aux bornes de la bobine.

La fréquence du signal 5 recueilli vaut f = Nx $\frac{Z}{60}$ (Hz) où N est la vitesse de rotation de l'arbre en T/mn. Son amplitude est une fonction croissante de la vitesse de rotation.

La rusticité de ce type de capteur leur permet de supporter les sévères contraintes d'environnement des turbo machines (vibrations, température, pollutions). Ils souffrent cependant de certaines limitations comme :
- des mesures difficiles à basse vitesse, le signal analogique est alors de faible amplitude et arrive à être inférieur au niveau du bruit électromagnétique ambiant ;
- une sensibilité importante aux parasites électromagnétiques induits ou conduits ;
- une faible résistance au foudroiement.

Un autre dispositif destiné à mesurer la vitesse de rotation est connue du document US-A-4 947 035.

Le capteur selon l'invention a pour but de s'affranchir de ces limitations tout en conservant les qualités du capteur électromécanique.

Un autre but de l'invention est de fournir ces avantages en se substituant facilement aux capteurs existants.

A toutes ces fins l'invention a pour objet un dispositif destiné à mesurer la vitesse de rotation d'un arbre du type comportant une roue dentée entraînée en rotation par l'arbre, un aimant placé au voisinage de la roue dentée, caractérisé en ce qu'il comporte une fibre optique comportant deux extrémités et une partie centrale, l'une des extrémités étant reliée à une source lumineuse, l'autre extrémité étant reliée à des moyens d'analyse de la lumière, et la partie centrale comportant une partie au moins située dans le champs magnétique produit par l'aimant et soumise dans cette partie à des contraintes engendrées par un matériau magnétostrictif.

Le mode général et deux modes préférés de réalisation de l'invention seront ci-après décrit en référence aux dessins annexés dans lesquels :

La figure 2 représente le mode général de réalisation de l'invention.

La figure 3 représente une coupe transversale du type de fibre optique utilisé dans chacun des deux modes de réalisation.

La figure 4 illustre le mode de variation du paramètre connu de la lumière émise.

La figure 5 illustre un premier mode de réalisation.

La figure 6 montre les axes de polarisation.

La figure 8 illustre un mode de réalisation de la bobine de capture.

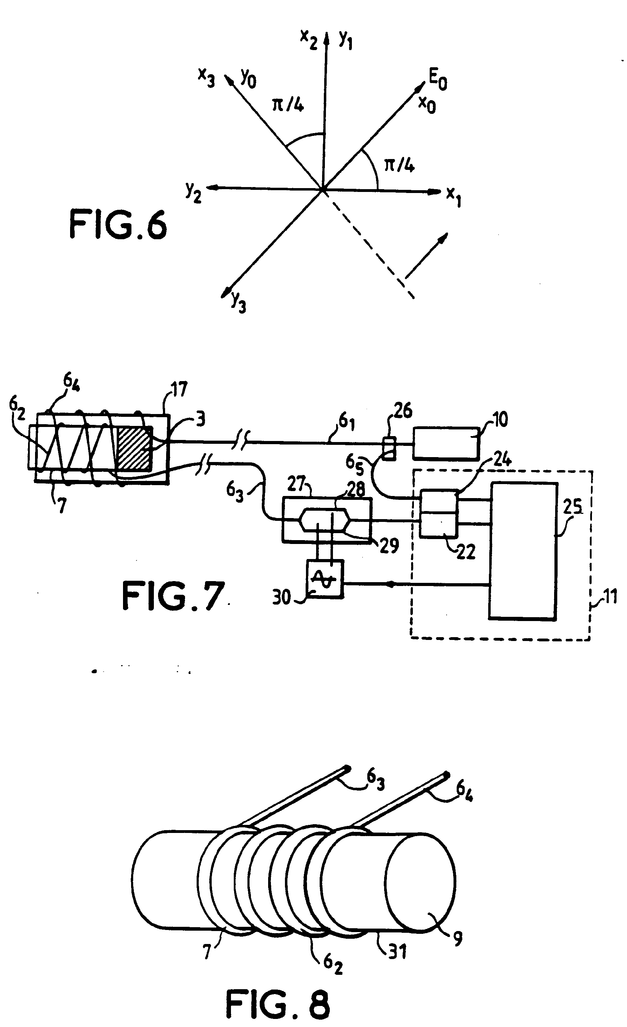

La figure 7 illustre un second mode de réalisation.

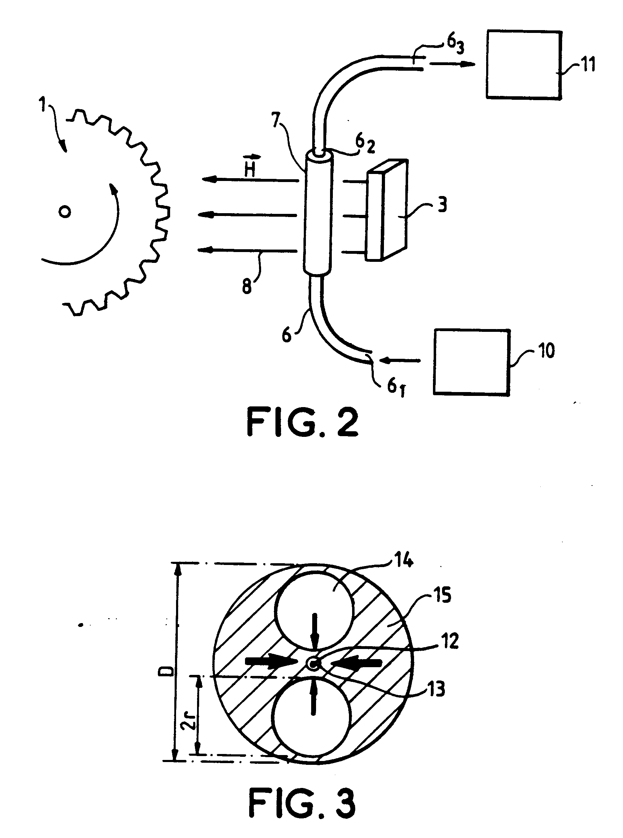

La figure 2 représente le mode général de réalisation de l'invention. Elle représente une roue dentée 1. Cette roue 1 est liée de façon connue à un arbre non représenté dont on veut mesurer la vitesse. La roue 1 est située dans le champs magnétique 8 produit par un aimant 3. Une fibre optique 6 reliée par une extrémité 61 à une source de lumière 10, comporte une partie centrale 6-2 dans le champs magnétique 8, l'extrémité 6-3 de cette fibre est reliée à un analyseur de lumière 11. Dans sa partie centrale 6-2 la fibre est soumise à des contraintes engendrées par les variations de dimension que provoquent sur un matériau magnétostrictif 7 les variations du champs magnétique 8. Ces contraintes provoquent des variations de dimension dans la partie centrale 6-2 de la fibre. Ces variations de dimension provoquent à leur tour la variation de certains paramètres de propagation de la lumière émise par la source 10. Ces variations sont mesurées par l'analyseur 11 et permettent de remonter à la vitesse de rotation de la roue 1.

On constate d'après cette description que la disposition reste identique à celle du capteur à roue phonique en sorte que les capteurs selon l'invention puissent remplacer facilement les capteurs existants.

Du fait de l'emploi d'une fibre optique comme capteur en lieu et place d'une bobine conductrice le dispositif est quasiment insensible au foudroiement et d'une façon générale à tous les parasites électromagnétiques.

On réalise donc un capteur qui de façon naturelle est galvaniquement isolé.

Enfin pour des raisons qui seront explicitées plus loin le dispositif reste sensible aux basses vitesses, contrairement aux dispositifs du type génératrices tachymétriques ou alternateurs homopolaires qui doivent être optimisés pour une gamme de vitesse. De ce fait l'emploi du dispositif selon l'invention peut conduire à diminuer le nombre de capteurs nécessaires, en particulier lorsqu'on veut mesurer des vitesses de rotation d'arbres comportant des phases transitoires (par exemple de 0 tours/mm à une vitesse nominale) que l'on veut contrôler. (démarage de réacteurs, freinage de roues...).

Le capteur selon l'invention est dit intrinsèque en ce sens que c'est la fibre elle-même qui sert d'élément sensible. Un capteur intrinsèque évite tout parcours optique dans l'air et est donc insensible aux modifications induites par les pollutions de tous ordres souvent présentes dans l'environnement aéronautique.

De préférence la fibre optique est une fibre biréfringente.

De préférence la contrainte du matériau magnétostrictif sur la fibre est exercée par le fait que la fibre est enroulée en tension sur un mandrin réalisé dans le matériau.

Elle peut aussi être exercée par le fait que la fibre est gainée de matériau magnétostrictif la fibre ainsi gainée étant enroulée sur un mandrin.

Elle peut aussi être exercée par cumul des deux modes précédents c'est-à-dire la fibre gainée de matériau magnétostrictif étant enroulée sur un mandrin magnétostrictif.

Le matériau magnétostrictif pourra être du métal glacé, du nickel, l'alliage 40% At Co-Fe, un oxyde de fer ou tout autre matériau magnétostrictif.

Deux modes de réalisation particuliers seront maintenant décrits en référence aux figures 3 à 8. Les éléments décrits dans l'un des modes ne sont pas nécessairement exclusifs de ceux décrits dans l'autre mode.

Dans ces deux modes de réalisation la fibre optique utilisée est une fibre monomode biréfringente à maintien de polarisation, sensible aux contraintes mécaniques extérieures. A titre d'exemple la fibre peut être à structure évidée ainsi qu'on le voit sur la figure 3. Les flèches traduisent l'anisotropie avec laquelle une contrainte uniforme extérieure est transmise vers le coeur. C'est cette anisotropie qui provoque la modification de la biréfringence de la fibre (notée $\beta$).

Sur la figure 3 qui représente une vue en coupe de la fibre utilisée on voit le coeur 12 de la fibre représentée conventionnellement par un point, c'est la partie où circule la lumière, la partie 13 représente la gaine optique. Le diamètre de la partie 13 est de l'ordre de quelques microns. Cette partie 13 est noyée dans une gaine 15 comportant deux évidements 14 qui sont, sur cette fibre, de section circulaire. Les centres des évidements 14 sont alignés avec le coeur 12 de la fibre. L'hétérogénéïté introduite par ces évidements conduit à une anisotropie des contraintes exercées sur la fibre, les contraintes les plus fortes étant transmises perpendiculairement à la ligne des centres des évidements 14, le diamètre total D de la fibre est de l'ordre de 125 μm.

Cette fibre qui est utilisée pour les besoins de l'invention ne fait pas partie de l'invention. Son mode de réalisation est décrit dans la demande de brevet n° FR 89.15872.

Pour une bonne compréhension de l'invention il est toutefois rappelé qu'une fibre biréfringente est une fibre où la lumière ne peut se propager que selon deux directions orthogonales notées XX' et YY' auxquelles correspondent deux constantes de propagation $\beta x$ et $\beta y$.

$$\beta x = \frac{2\pi}{\lambda} n_x \text{ et } \beta y = \frac{2\pi}{\lambda} n_y$$

est la longueur d'onde et $n_x$ et $n_y$ sont les indices respectifs dans les deux directions. Si $n_x$ et $n_y$ sont différents, les deux ondes se propagent à des vitesses différentes. Si la fibre a une longueur L, le déphasage total entre les deux ondes est :

$$\varnothing = (\beta x - \beta y) L$$

avec $\beta = \beta x - \beta y$

$$\varnothing = \beta L$$

Si maintenant on vient appliquer un système de contraintes à la fibre, cette dernière va subir des déformations élastiques : modification de longueur ($\Delta L$) et modification de section entraînant ainsi qu'on l'a dit une modification de la biréfringence ($\Delta\beta$). Il en résulte au premier ordre :

$$\Delta\varnothing = \beta\Delta L + L\Delta\beta$$

Si le phénomène appliqué sur la fibre est périodique, il apparaît une variation périodique du déphasage $\Delta\varnothing$. En mesurant ce dernier on en déduit la période et par conséquent la vitesse de rotation en tenant compte du nombre de dents Z.

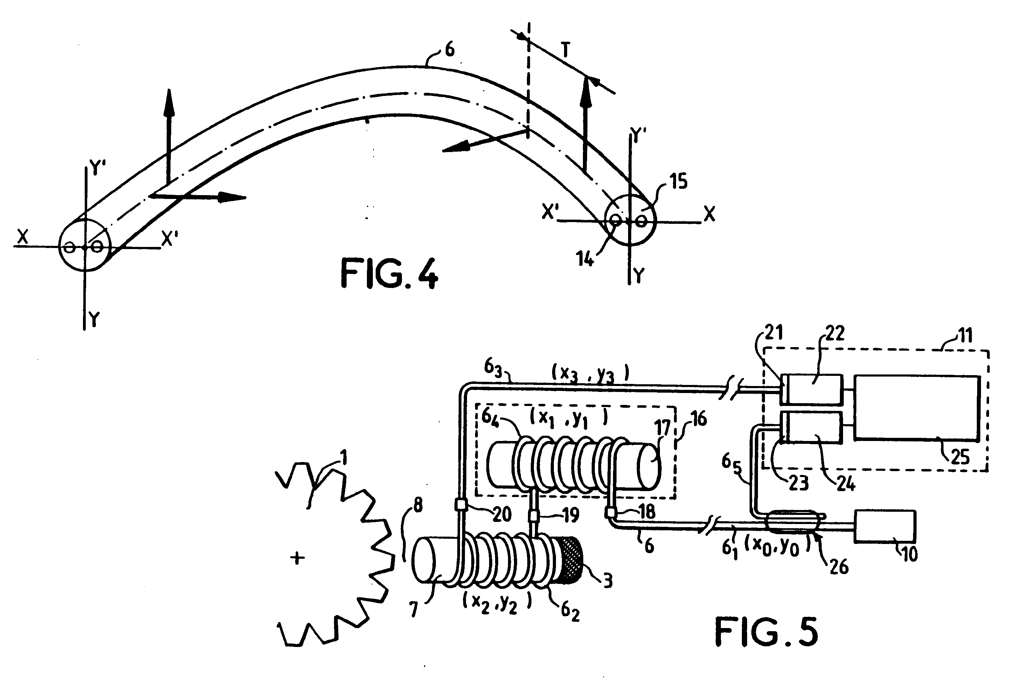

Ces modes de propagations sont représentés figure 4. L'axe XX' correspond à l'axe joignant les centres des évidements 14. L'axe YY' lui est perpendiculaire. Les vecteurs représentent les directions des modes de propagation ; T est le retard entre les deux ondes.

Il sera décrit ci-après en référence aux figures 5 et 6 un premier mode de réalisation de l'invention dit mode polarimétrique car dans ce mode les déphasages sont mesurés par la variation périodique de l'intensité lumineuse reçue sur un photodétecteur à travers un polariseur filtrant la lumière selon l'une des directions XX' ou YY'.

Sur la figure 5 on voit la source lumineuse 10 qui émet une lumière polarisée linéairement selon une direction E. Cette source est couplée à une fibre 6 fortement biréfringente selon un axe propre de la fibre ce qui maintient son état de polarisation jusqu'à un analyseur 11. L'exemple de réalisation représenté figure 5 comporte outre les éléments déjà cités pour décrire le mode de réalisation général, un dispositif de compensation en température 16. Ce dispositif a pour effet de compenser les contraintes introduites par les forces de dilatation. Les matériaux magnétostrictifs ont des variations de dimension dues aux champs magnétiques du même ordre de grandeurs que celles dues aux variations de température. En raison de la lenteur des variations de température on pourrait se passer du dispositif de compensation 16. Toutefois pour une meilleure précision, en particulier aux basses vitesses, cette compensation est nécessaire.

Le matériau magnétostrictif 7 chargée de produire des contraintes dans la partie 6-2 de la fibre 6 a la forme d'une bobine sur laquelle on enroule en tension la fibre 6-2. Le dispositif compensateur 16 est constitué d'une bobine identique 17 sur laquelle on enroule de façon identique une partie 6-4 de la fibre optique 6 de même longueur que la partie 6-2. les couplages de raccordements 18, 19, 20 entre les parties 6-1, 6-2, 6-3, 6-4 de la fibre 6 sont explicités ci-après en référence à la figure 6.

Sur cette figure ont été représentés les axes xo yo (correspondant aux axes XX' et YY' de la figure 4) de la partie de fibre 6-1. Le vecteur Eo orienté suivant xo représente la polarisation de la source lumineuse 10. Le couplage 18 de cette onde à 45° des axes propres x1 et y1 de la fibre de compensation 6-4 permet d'exciter les deux axes de propagation de cette partie de fibre. La bobine de compensation 17 est identique à la bobine de mesure 7, mais non soumise aux variations du champ magnétique 8.

Le couplage 19 de la partie de fibre de compensation 6-4 sur la partie de fibre de mesure 6-2 est fait à 90° des axes propres pour intervertir les axes lents et rapides (x2 aligné avec y1 et y2 aligné avec x1) des parties de fibres 6-2 et 6-4 et compenser ainsi les effets de contraintes communes aux deux fibres dues aux variations de température.

L'onde lumineuse est ensuite reformée et déportée à l'aide d'une dernière partie de fibre biréfringente 6-3 d'axes x3 et y3, dont le couplage 20 est à 45° de la fibre de mesure.

Le fonctionnement est le suivant :

L'onde lumineuse émise par la source 10 polarisée selon Eo excite également les axes x1 et y1 de la fibre 6-4 de compensation. Le retard apporté par exemple sur l'axe x1 dans la partie 6-4 sera compensé par une avance dans la fibre 6-2 puisque l'axe x2 de la fibre 6-2 est orienté à 90° de l'axe X1 de la fibre 6-4. Le couplage à 45° de la partie de fibre 6-3 par rapport à la partie de fibre 6-2 remet la partie de fibre 6-3 dans la même disposition que la partie 6-1 par rapport à l'onde Eo. Comme il a été expliqué plus haut le passage des dents de la roue 1 va provoquer un déphasage périodique de l'onde lumineuse en sortie de la partie de fibre 6-2 ce qui va se traduire par un flux d'intensité variable dans l'analyseur 11.

Le fonctionnement de ce dernier va être maintenant explicité.

Il comporte un polariseur 21 recevant la lumière en provenance de la partie de fibre 6-3 et polarisé parallèlement à Eo. La lumière reçu à travers le polariseur 21 est reçu sur un photodétecteur 22 dont le signal est traité par des circuits de traitement 25. Ces circuits peuvent alimenter des dispositifs de visualisation et/ou des entrées de dispositif régulateur de vitesse de rotation non représentés.

On constate qu'un dispositif de ce genre est peu sensible à la valeur moyenne de l'intensité puisqu'il mesure la fréquence des variations de l'intensité reçue sur le détecteur 22. Les circuits de traitements 25 comptent les annulations de la dérivée du signal reçu. Pour cette raison le dispositif garde encore sa sensibilité aux basse vitesses. Il est néanmoins possible d'améliorer cette sensibilité notamment aux basse vitesses par un dispositif annexe permettant de comparer directement la lumière émise et la lumière reçue. Pour cela la source est reliée par l'intermédiaire d'un coupleur 26 et d'une fibre 6-5 de même nature que la fibre employée comme capteur à un capteur 24 par l'intermédiaire d'un polariseur 23. Le dispositif de traitement de signal comporte dans ce cas un dispositif comparateur. La régulation ainsi introduite permet de s'affranchir d'éventuelles fluctuations de la source.

Un second mode de réalisation dit interférométrique va être maintenant décrit en référence à la figure 7. Ce mode diffère du précédent sur trois points.

1) La source 10 utilisée est une source lumineuse de faible cohérence, on obtient sur la fibre de mesure deux trains d'onde décorrelés se propageant sur les deux axes de polarisation de la fibre.

2) Le traitement de signal en sortie de la fibre 6-3 est effectué à l'aide d'un dispositif de type interferométrique.

3) Le dispositif 16 de compensation de température est constitué d'une bobine 17 en matériau non magnétostrictif concentrique de la bobine 7 en matériau magnétostrictif. Cette disposition est destinée à améliorer la compacité du dispositif de mesure. Dans cette configuration la bobine 17 est construite dans un matériau insensible au champs magnétique mais ayant dans la gamme de température où va fonctionner le détecteur un coefficient de dilatation aussi proche que possible de celui de la bobine 7. La longueur 6-4 de partie de fibre entourée autour de la bobine 17 est égale à la longueur 6-2 de partie de fibre enroulée autour de la bobine 7. Les couplages 18, 19, 20 sont effectués de la même manière que dans le dispositif décrit précédemment.

Le fonctionnement de ce deuxième mode de réalisation est le suivant.

Les deux trains d'onde en sortie de fibre 6-3 selon les axes x3 et y3 sont envoyés sur les deux bras 28, 29 d'un interféromètre 27 du type Mach Zehnder. Un modulateur électrooptique 30 est commandé de façon à remettre les deux ondes en phases, ce qui se traduit par un maximum d'intensité sur un détecteur photoélectrique 22. Le signal produit par ce détecteur alimente comme dans le dispositif précédent par l'intermédiaire d'un circuit de traitement 25, des visualisations et/ou des entrées de régulateur. Dans ce cas une partie du signal en sortie de circuit 25 est utilisé comme signal de contre réaction sur le modulateur électrooptique 30. La régulation ainsi introduite à pour but de maintenir le maximum d'intensité sur le détecteur 22. Comme dans le cas précédent la source 10 peut être reliée au circuit de traitement de signal 25 par l'intermédiaire d'un coupleur 26, fibre 6-5 et d'un détecteur 24 de façon à permettre la prise en compte d'éventuelles fluctuations de la source.

Le dispositif ci-dessus décrit fonctionnerait aussi bien avec un ensemble de bobines 7-17 réalisées de la façon décrite figure 5.

De même le dispositif décrit figure 5 pourrait fonctionner avec des bobines 7-17 comme décrites figure 7.

Les dispositifs des figures 5 et 7 ont été représentés avec un dispositif 16 de compensation de température placé par rapport à la source lumineuse 10 en amont du dispositif de mesure proprement dit. Il est évident qu'avec les adaptations nécessaires notamment en ce qui concerne les couplages de fibres 18, 19, 20 ce dispositif pourrait aussi bien être placé en aval.

De même quel que soit le type de traitement de signal en sortie de la partie de fibre optique 6-3 la contrainte du matériau magnétostrictif sur la partie de fibre optique 6-2 peut être réalisée soit comme indiqué dans ces deux exemples soit par gainage de la fibre dans un matériau magnétostrictif la fibre ainsi gainé étant enroulée en tension sur une bobine qui peut être ou non en matériau magnétostrictif.

Un exemple d'un tel enroulement est représentée figure 8. Sur cette figure on voit une bobine 9 sur laquelle est enroulée une partie de fibre 6-2 gainée dans un matériau magnétostrictif 31.

## Revendications

1. Dispositif destiné à mesurer la vitesse de rotation d'un arbre du type comportant une roue dentée (1) entraînée en rotation par l'arbre, un aimant (3) placé au voisinage de la roue dentée, caractérisé en ce qu'il comporte une fibre optique (6) comportant deux extrémités (6-1, 6-3) et une partie centrale (6-2), l'une des extrémités (6-1) étant reliée à une source lumineuse (10), l'autre extrémité (6-3) étant reliée à des moyens d'analyse de la lumière (11), et la partie centrale (6-2) comportant une partie au moins située dans le champs magnétique (8) produit par l'aimant (3) et étant soumise dans cette partie à des contraintes engendrées par un matériau magnétostrictif (7).

2. Dispositif selon la revendication 1, caractérisé en ce que la fibre optique 6 est une fibre biréfringente.

3. Dispositif selon la revendication 2, caractérisé en ce que la fibre optique (6) est une fibre noyée dans une gaine (15) comportant deux évidements (14) diamétralement opposés de part et d'autre de la fibre.

4. Dispositif selon la revendication 3, caractérisé en ce que la contrainte du matériau magnétostrictif (7) sur la fibre (6) est obtenue par le fait que la fibre (6) est enroulée en tension sur un mandrin (7) réalisé dans le matériau magnétostrictif.

5. Dispositif selon la revendication 3, caractérisé en ce que la contrainte du matériau magnétostrictif (7) sur la fibre (6) est obtenue par le fait que la fibre (6) est gainée dans une gaine (31) réalisée en matériau (7) magnétostrictif enroulée en tension sur un mandrin (9).

6. Dispositif selon la revendication 5, caractérisé en ce que le mandrin (9) est lui-même magnétostrictif.

7. Dispositif selon la revendication 3, caractérisé en ce qu'il comporte un dispositif (16) de compensation en température.

8. Dispositif selon la revendication 7, caractérisé en ce que le dispositif de compensation en température (16) comporte une bobine (17) identique à la bobine (7) sur laquelle est enroulée de façon identique une longueur de fibre (6-4) égale à la longueur de fibre (6-2) enroulée sur la bobine (7).

9. Dispositif selon la revendication 7, caractérisé en ce que le dispositif de compensation en température (16) comporte une bobine (17) réalisée en matériau insensible aux champs magnétiques, concentrique de la bobine (7) et sur laquelle est enroulée avec la même tension une longueur de fibre (6-4) égale à la longueur de fibre (6-2) enroulée sur la bobine (7).

10. Dispositif selon l'une des revendications 8 ou 9, caractérisé en ce que la source de lumière (10) émet une lumière polarisée linéairement selon l'un des axes de biréfringence de la partie de fibre (6-1) sur laquelle la source est couplée.

11. Dispositif selon la revendication 10, caractérisé en ce que le couplage (18) entre la partie de fibre (6-1) lié à la source et la partie de fibre (6-4) du dispositif de compensation (16), le couplage (19) entre cette dernière partie et la partie de fibre (6-2) enroulée sur la bobine (7), le couplage (20) entre cette dernière partie et la partie de fibre (6-3) liée à l'analyseur (11) sont réalisés respectivement de telle sorte que les axes de biréfringence des différentes parties de fibres fassent entre eux des angles de 45°, 90°, et 45° respectivement.

12. Dispositif selon la revendication 11, caractérisé en ce que les moyens d'analyse de lumière (11) comporte un polariseur 21 axé selon l'un des axes de biréfringence de la partie de fibre (6-3) un détecteur photométrique (22) et un circuit (25) de traitement de signal.

13. Dispositif selon l'une des revendications 8 ou 9, caractérisé en ce que la source lumineuse émet une lumière de faible cohérence qui se décompose dans la fibre (6) en deux trains d'onde X et Y et en ce que les moyens d'analyse (11) comporte un circuit optique intégré recevant les signaux en provenance de la fibre (6) et envoyant les deux ondes sur chacun des deux bras (28-29) d'un interferomètre de Mach Zehnder (27) un modulateur électroptique (30) commandé par un circuit de traitement de signal (25) agissant sur l'interféromètre pour mettre en phase les trains d'onde X et Y.

14. Dispositif selon la revendication 12, caractérisé en ce que la source lumineuse (10) et les moyens d'analyse (11) sont reliés en outre par une fibre (6-5) délivrant son signal sur un photodétecteur (24) par l'intermédiaire d'un polariseur linéaire 23.

15. Dispositif selon la revendication 13, caractérisé en ce que la source lumineuse (10) et les moyens d'analyse (11) sont reliés en outre par une fibre (6-5) délivrant son signal sur un photodétecteur (24).

**Patentansprüche**

1. Vorrichtung zum Messen der Drehzahl einer Welle vom Typ mit einem von der Welle gedrehten Zahnrad (1), einem Magnet (3), der in der Nähe des Zahnrades angeordnet ist, dadurch gekennzeichnet, daß sie eine Lichtleitfaser (6) mit zwei Enden (6-1, 6-3) und einem Mittelteil (6-2) enthält, wobei eines der Enden (6-1) mit einer Lichtquelle (10) verbunden ist, das andere Ende (6-3) mit Mitteln zum Analysieren des Lichts (11) verbunden ist und der Mittelteil (6-2) wenigstens einen Abschnitt aufweist, der in dem vom Magnet (3) erzeugten Magnetfeld (8) liegt und in diesem Abschnitt Beanspruchungen ausgesetzt ist, die von einem magnetostriktiven Material (7) erzeugt werden.

2. Vorrichtung nach Anspruch 1, dadurch gekennzeichnet, daß die Lichtleitfaser (6) eine doppelbrechende Faser ist.

3. Vorrichtung nach Anspruch 2, dadurch gekennzeichnet, daß die Lichtleitfaser (6) eine Faser ist, die in einem Mantel (15) eingebettet ist, der zwei beiderseits der Faser diametral gegenüberliegende Hohlräume (14) aufweist.

4. Vorrichtung nach Anspruch 3, dadurch gekennzeichnet, daß die Beanspruchung der Faser (6) durch das magnetostriktive Material (7) aufgrund der Tatsache erhalten wird, daß die Faser (6) unter Spannung auf einem Dorn (7) gewickelt ist, der aus dem magnetostriktiven Material hergestellt ist.

5. Vorrichtung nach Anspruch 3, dadurch gekennzeichnet, daß die Beanspruchung der Faser (6) durch das magnetostriktive Material (7) durch die Tatsache erhalten wird, daß die Faser (6) in einen Mantel (31) eingehüllt ist, der aus magnetostriktivem Material (7) hergestellt ist, das unter Spannung auf einen Dorn (9) gewickelt ist.

6. Vorrichtung nach Anspruch 5, dadurch gekennzeichnet, daß der Dorn (9) selbst magnetostriktiv ist.

7. Vorrichtung nach Anspruch 3, dadurch gekennzeichnet, daß sie eine Temperaturkompensationsvorrichtung enthält.

8. Vorrichtung nach Anspruch 7, dadurch gekennzeichnet, daß die Temperaturkompensationsvorrichtung (16) einen mit dem Spulenkörper (7) identischen Spulenkörper (17) aufweist, auf den in identischer Weise ein Faserstück (6-4) gewickelt ist, dessen Länge gleich der Länge der Faser (6-2) ist, die auf den Spulenkörper (7) gewickelt ist.

9. Vorrichtung nach Anspruch 7, dadurch gekennzeichnet, daß die Temperaturkompensationsvorrichtung (16) einen Spulenkörper (17) enthält, der aus einem für Magnetfelder unempfindlichen Material hergestellt ist und der konzentrisch zum Spulenkörper (7) verläuft, wobei auf ihn mit der gleichen Spannung ein Faserstück (6-4) gewickelt ist, dessen Länge gleich der Länge der Faser (6-2) ist, die auf den Spulenkörper (7) gewickelt ist.

10. Vorrichtung nach einem der Ansprüche 8 oder 9, dadurch gekennzeichnet, daß die Lichtquelle (10) ein Licht ausstrahlt, das längs einer der Doppelbrechachsen des Teils der Faser (6-2) linear polarisiert ist, mit dem die Quelle gekoppelt ist.

11. Vorrichtung nach Anspruch 10, dadurch gekennzeichnet, daß die Kopplung (18) zwischen dem mit der Quelle verbundenen Teil der Faser (6-1) und dem Teil der Faser (6-4) der Kompensationsvorrichtung (16), die Kopplung (19) zwischen diesem letzteren Teil und dem Teil der Faser (6-2), der auf den Spulenkörper (7) gewickelt ist, die Kopplung (20) zwischen diesem letzteren Teil und dem Teil der Faser (6-3), der mit dem Analysator (11) verbunden ist, jeweils so verwirklicht sind, daß die Doppelbrechachsen zwischen den verschiedenen Faserteilen untereinander die Winkel 45°, 90° bzw. 45° bilden.

12. Vorrichtung nach Anspruch 11, dadurch gekennzeichnet, daß die Lichtanalysemittel (11) einen Polarisator (21), dessen Achse längs einer der Doppelbrechachsen des Faserteils (6-3) verläuft, einen photometrischen Detektor (22) und eine Signalverarbeitungsschaltung (25) enthalten.

13. Vorrichtung nach einem der Ansprüche 8 oder 9, dadurch gekennzeichnet, daß die Lichtquelle ein Licht mit schwacher Kohärenz ausstrahlt, das sich in der Faser (6) in zwei Wellenzüge X und Y zerlegt, und daß die Analysemittel (11) eine integrierte optische Schaltung enthalten, die die aus der Faser (6) kommenden Signale empfängt und die zwei Wellen auf jedem der zwei Arme (28-29) eines Mach-Zehnder-Interferometers (27) eines elektrooptischen Modulators (30) beschickt, der von einer Signalverarbeitungsschaltung (25) gesteuert wird, die so auf das Interferometer einwirkt, daß die Wellenzüge X und Y in Phase gebracht werden.

14. Vorrichtung nach Anspruch 12, dadurch gekennzeichnet, daß die Lichtquelle (10) und die Analysemittel (11) außerdem mit einer Faser (6-5) verbunden sind, die ihr Signal an einen Photodetektor (24) über einen linearen Polarisator (23) liefert.

15. Vorrichtung nach Anspruch 13, dadurch gekennzeichnet, daß die Lichtquelle (10) und die Analysemittel (11) ferner mit einer Faser (6-5) verbunden sind, die ihr Signal an einen Photodetektor (24) liefert.

**Claims**

1. Device intended to measure the speed of rotation of a shaft, of the type comprising a toothed wheel (1) driven in rotation by the shaft, a magnet (3) placed in the vicinity of the toothed wheel, characterized in that it comprises an optical fibre (6) comprising two ends (6-1, 6-3) and a central portion (6-2), one of the ends (6-1) being connected to a light source (10), the other end (6-3) being connected to means (11) for analysing the light, and the central portion (6-2) comprising at least one portion located in the magnetic field (8) produced by the magnet (3) and being subjected, in this portion, to stresses generated by a magnetostrictive material (7).

2. Device according to Claim 1, characterized in that the optical fibre 6 is a birefringent fibre.

3. Device according to Claim 2, characterized in that the optical fibre (6) is a fibre embedded in a sheath (15) comprising two cut-outs (14) which are diametrically opposed on either side of the fibre.

4. Device according to Claim 3, characterized in that the stress from the magnetostrictive material (7) on the fibre (6) is obtained by the fact that the fibre (6) is wound under tension on a mandrel (7) made from the magnetostrictive material.

5. Device according to Claim 3, characterized in that the stress from the magnetostrictive material (7) on the fibre (6) is obtained by the fact that the fibre (6) is sheathed in a sheath (31) made from magnetostrictive material (7), this sheath being wound under tension on a mandrel (9).

6. Device according to Claim 5, characterized in that the mandrel (9) is itself magnetostrictive.

7. Device according to Claim 3, characterized in that it includes a temperature compensation device (16).

8. Device according to Claim 7, characterized in that the temperature compensation device (16) comprises a coil (17) identical to the coil (7) on which is wound, in an identical manner, a fibre length (6-4) equal to the fibre length (6-2) wound on the coil (7).

9. Device according to Claim 7, characterized in that the temperature compensation device (16) comprises a coil (17) made from a material insensitive to the magnetic fields, concentric with the coil (7) and on which is wound, with the same tension, a fibre length (6-4) equal to the fibre length (6-2) wound on the coil (7).

10. Device according to one of Claims 8 or 9, characterized in that the light source (10) emits linearly polarized light along one of the birefringence axes of the fibre portion (6-1) to which the source is coupled.

11. Device according to Claim 10, characterized in that the coupling (18) between the fibre portion (6-1) linked to the source and the fibre portion (6-4) of the compensation device (16), the coupling (19) between the latter portion and the fibre portion (6-2) wound on the coil (7), the coupling (20) between the latter portion and the fibre portion (6-3) linked to the analyser (11) are respectively produced in such a way that the bi-refringence axes of the various fibre portions make angles of 45°, 90° and 45°, respectively, between them.

12. Device according to Claim 11, characterized in that the light analysing means (11) comprise a polarizer (21) whose axis is along one of the birefringence axes of the fibre portion (6-3), a photometric detector (22) and a signal processing circuit (25).

13. Device according to one of Claims 8 and 9, characterized in that the light source emits light of low coherence which is decomposed in the fibre (6) into two wave trains X and Y and in that the analysing means (11) comprise an integrated optical circuit receiving the signals coming from the fibre (6) and sending the two waves onto each of the two arms (28-29) of a Mach-Zehnder interferometer (27), an electro-optic modulator (30) controlled by a signal processing circuit (25) acting on the interferometer in order to bring the wave trains X and Y into phase.

14. Device according to Claim 12, characterized in that the light source (10) and the analysing means (11) are furthermore connected by a fibre (6-5) delivering its signal to a photodetector (24) via a linear polarizer (23).

15. Device according to Claim 13, characterized in that the light source (10) and the analysing means (11) are furthermore connected by a fibre (6-5) delivering its signal to a photodetector (24).

# FIG. 1

FIG. 2

FIG. 3

FIG.4

FIG.5

FIG.6

FIG.7

FIG. 8

12